# FASCICULE DE BREVET EUROPEEN

(11) **EP 3 601 044 B1**
(45) Date de publication et mention de la délivrance du brevet: **27.01.2021**
(21) Numéro de dépôt: 18714511.5
(22) Date de dépôt: 29.03.2018
(51) Int. Cl.: B64D 11/00, B64D 11/06

(54) **ARRANGEMENT DE SIÈGES INDIVIDUELS POUR PASSAGERS D'UN AVION MUNI DE SUPPORTS D'ÉCRAN FORMANT PAROI DE SÉPARATION**
INDIVIDUELLE FLUGZEUGPASSAGIERE SITZANORDNUNG MIT BILDSCHIRMSTÜTZEN, DIE EINE TRENNWAND BILDEN
INDIVIDUAL SEAT ARRANGEMENT FOR AIRCRAFT PASSENGERS LINKED BY SCREEN SUPPORTS FORMING A SEPARATION WALL

(30) Priorité: 31.03.2017 FR 1752817
(43) Date de publication de la demande: 05.02.2020
(73) Titulaire: Safran Seats, 78370 Plaisir (FR)
(72) Inventeur: WHITE, Jeremy, Enfield, Middlesex EN1 2QW (GB); SANDHAM, Nicholas, London SW18 3BG (GB); SEALE, Richard, Leamington Spa Warwickshire CV32 5BE (GB); CHRAIBI, Omar, London W8 6TQ (GB)
(74) Mandataire: Marconnet, Sébastien
(86) Numéro de dépôt international: PCT/EP2018/058164
(87) Numéro de publication internationale: WO 2018/178276

(56) Documents cités:
- DE-A1-102008 012 523
- US-A1- 2012 104 165
- US-A1- 2014 361 585
- US-A1- 2015 136 905
- US-A1- 2016 272 323

## Description

La présente invention porte sur un arrangement de sièges individuels pour passager d'un avion muni de supports d'écran formant paroi de séparation.

Les sièges d'avion de type "Classe Affaires" offrent aux passagers différentes positions de confort, de la position "assise" jusqu'à une position "allongée" dans laquelle le siège définit un plan de couchage sensiblement horizontal pour le passager.

Des positions intermédiaires de confort sont aussi proposées, telles que la position "relax" dans laquelle le dossier est fortement incliné. Généralement, ces positions sont obtenues par l'inclinaison du dossier, pivotant autour d'un axe horizontal et perpendiculaire à l'axe du siège. Le passager peut alors rester sur le siège lors de transitions entre les différentes positions.

Le lit est généralement constitué notamment du dossier, de l'assise, d'un repose-jambes et d'un repose-pieds, ces derniers pouvant être fixes ou liés à la cinématique du siège.

Certains agencement de sièges pour cabine d'avion de type "Classe Affaires" permettent un accès direct à une allée de circulation pour tous les passagers, via un passage disposé entre deux sièges agencés l'un derrière l'autre selon la direction longitudinale de l'avion. Les passagers peuvent ainsi sortir de leur siège facilement notamment lorsque le siège est en position "allongée" sans gêner d'autres passagers.

Dans certaines configurations, les sièges sont disposés suivant deux colonnes longitudinales et les sièges d'une même rangée présentent des axes inclinés, c'est-à-dire qu'ils forment un angle non nul, par rapport à l'axe longitudinal de l'arrangement.

Le document US2007246981 décrit une configuration en chevron dite de type "Herringbone" en anglais, dans laquelle les sièges d'une même rangée sont tournées vers l'intérieur en direction de l'axe longitudinal de l'arrangement, c'est-à-dire que leurs axes coupent l'axe longitudinal de l'avion à l'avant des sièges.

Dans la configuration décrite dans le document WO03/013903 dite de type "reverse Herringbone", les sièges d'une même rangée sont tournés vers l'extérieur de l'axe longitudinal, c'est-à-dire que les axes coupent l'axe longitudinal de l'avion à l'arrière des sièges. Les passagers sont ainsi orientés vers l'allée de circulation de la cabine. Le document US2014361585 décrit un arrangement de sièges d'aéronef comprenant une console et un écran.

L'invention vise à améliorer la modularité des configurations existantes en proposant un arrangement de sièges individuels destiné à être installé dans une cabine d'avion comportant au moins un module de deux sièges disposés en face l'un de l'autre, ledit module présentant une direction d'allongement longitudinale, caractérisé en ce que ledit arrangement comporte en outre:
- une console disposée entre les deux sièges du module,
- un écran associé à chaque siège, chaque écran étant monté sur un support d'écran,
- les supports d'écran étant mobiles entre une position rangée et une position déployée d'utilisation dans laquelle les supports d'écran sont positionnés bord à bord et forment une paroi de séparation entre les deux sièges situés en face l'un de l'autre.

Selon une réalisation, une longueur d'un support d'écran est inférieure ou égale à une largueur de la console lorsque ledit support d'écran est en position rangée.

Selon une réalisation, au moins un bras assure une liaison entre le support d'écran et un élément structurel.

Selon une réalisation, une extrémité du bras est montée rotative par rapport au support et une autre extrémité des bras est monté rotative par rapport à l'élément structurel.

Selon une réalisation, l'élément structurel est un mât ou une paroi latérale verticale.

Selon une réalisation, le bras est apte à être reçu dans une gorge ménagée dans une face du support d'écran.

Selon une réalisation, une glissière montée sur la console est apte à assurer une reprise d'efforts appliqués sur le bras du support d'écran.

Selon une réalisation, un écran est articulé par rapport au support d'écran correspondant, notamment suivant un axe de rotation vertical.

Selon une réalisation, un support d'écran comporte un volet externe et un volet interne articulés entre eux suivant un axe de rotation vertical.

Selon une réalisation, le volet externe est monté rotatif autour d'un axe vertical par rapport à un élément structurel correspondant.

Selon une réalisation, une extrémité du volet interne est montée mobile en rotation et en translation par rapport à un rail fixé sur la console.

Selon une réalisation, lorsqu'un support d'écran est en position déployée d'utilisation, le volet externe et le volet interne se situent sensiblement dans un même plan dans le prolongement l'un de l'autre.

Selon une réalisation, lorsque les supports d'écran sont en position d'utilisation déployée, les volets externes des deux supports d'écran adjacents se situent bord à bord de manière à former une paroi de séparation entre les deux sièges.

Selon une réalisation, un écran est monté mobile en rotation sur un des volets.

Selon une réalisation, lorsqu'un support d'écran est dans une position rangée, le volet externe et le volet interne sont superposés au moins partiellement l'un sur l'autre.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- Les figures 1a à 1c sont des vues en perspective illustrant un premier mode de réalisation de l'arrangement de sièges selon l'invention sans les écrans;
- Les figures 2a à 2c sont des vues en perspective illustrant la cinématique de supports d'écran selon l'invention permettant de former une paroi de séparation entre deux sièges en vis-à-vis l'un de l'autre;
- Les figures 3a à 3c sont des vues en perspective illustrant la cinématique d'un deuxième mode de réalisation de supports d'écran selon l'invention;
- Les figures 4a à 4d sont des vues en perspective illustrant la cinématique d'un troisième mode de réalisation de supports d'écran selon l'invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Il est à noter que les différentes caractéristiques techniques apparaissant ci-après pourront être revendiquées de façon indépendante les unes des autres.

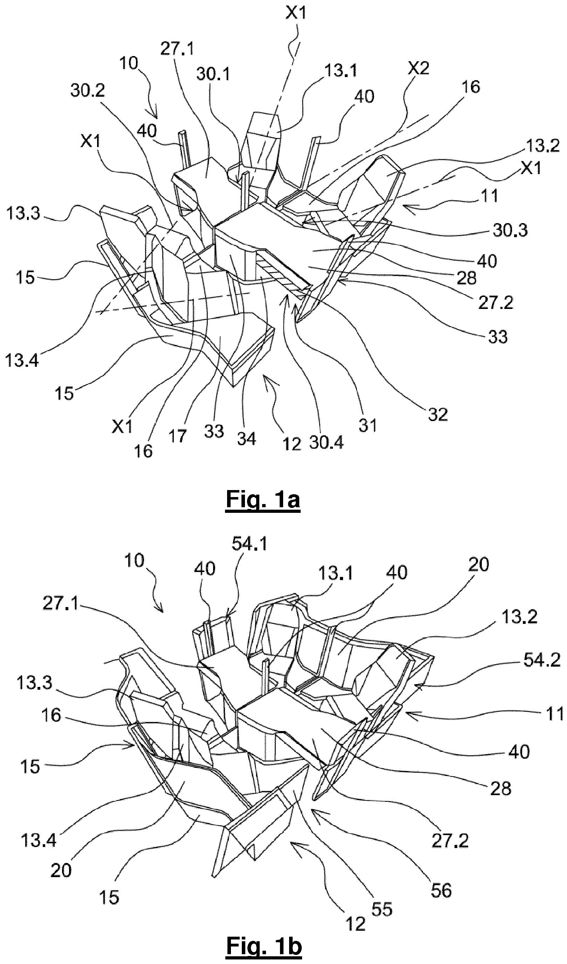

Les figures 1a à 1c montrent un arrangement 10 de sièges individuels destiné à être installé dans une cabine d'avion. Cet arrangement 10 comporte un premier ensemble 11 de deux sièges 13.1, 13.2 et un deuxième ensemble 12 de deux sièges 13.3, 13.4. Dans chaque ensemble 11, 12, les sièges (13.1 et 13.2 pour l'ensemble 11, et 13.3 et 13.4 pour l'ensemble 12) sont situés côte à côte l'un de l'autre.

Chaque siège 13.1-13.4 présente un axe X1 correspondant à l'intersection entre un plan horizontal et un plan de symétrie du siège. Chaque siège 13.1-13.4 est de préférence convertible entre une position "assise" correspondant à la position utilisée notamment lors des phases d'arrêt, de décollage, et d'atterrissage de l'avion et une position "allongée" dans laquelle le siège 13.1-13.4 définit un plan de couchage sensiblement horizontal pour le passager. Chaque siège 13.1-13.4 pourra également prendre des positions intermédiaire, dites positions relax, entre ces deux positions extrêmes.

L'arrangement 10 présente un axe longitudinal X2 qui pourra s'étendre suivant l'axe de la cabine d'avion ou être parallèle à cet axe. En variante, l'axe X2 pourra être sensiblement perpendiculaire ou former un angle quelconque par rapport à l'axe de la cabine. L'axe X2 longitudinal passe entre les sièges 13.1 et 13.2 (respectivement 13.3 et 13.4) d'un même ensemble 11 (respectivement 12). Cet axe X2 pourra se situer dans un plan de symétrie de l'arrangement 10.

Plus précisément, un premier siège 13.1 du premier ensemble 11 est positionné en face d'un premier siège 13.3 du deuxième ensemble 12 et un deuxième siège 13.2 du premier ensemble 11 est positionné en face d'un deuxième siège 13.4 du deuxième ensemble 12.

En outre, le premier siège 13.1 et le deuxième siège 13.2 du premier ensemble 11 sont tournés vers l'intérieur en direction de l'axe longitudinal X2 de l'arrangement 10. Le premier siège 13.3 et le deuxième siège 13.4 du deuxième ensemble 12 sont tournés vers l'extérieur à l'opposé de l'axe longitudinal X2 de l'arrangement 10.

De préférence, les axes X1 des sièges 13.1, 13.2, 13.3, 13.4 forment sensiblement le même angle par rapport à l'axe longitudinal X2 de l'arrangement 10. Les axes X1 des sièges d'un même ensemble 11, 12 coupent l'axe longitudinal X2 de l'arrangement 10 sensiblement en un même point.

Ainsi, les axes X1 des sièges 13.1, 13.2 du premier ensemble 11 coupent l'axe longitudinal X2 à l'avant des sièges 13.1, 13.2 sensiblement en un même point; tandis que les axes X1 des sièges 13.3, 13.4 du deuxième ensemble 12 coupent l'axe longitudinal X2 à l'arrière des sièges 13.3, 13.4 sensiblement en un même point.

Alternativement, les axes X1 des sièges d'un même ensemble 11, 12 pourront être décalés l'un par rapport à l'autre selon l'axe longitudinal X2, de sorte que les axes des sièges d'un même ensemble 11, 12 coupent l'axe longitudinal X2 en des points différents.

Chaque siège 13.1, 13.2, 13.3, 13.4 est intégré dans un logement correspondant d'un module de base 15. Ce module de base 15 comporte un accoudoir 16 situé d'un côté du siège 13.1-13.4 et un coussin 17 situé de l'autre côté du siège 13.1-13.4. Le coussin 17 est de préférence un coussin de maximisation du couchage destiné à être positionné dans le prolongement du plan de couchage du siège 13.1-13.4 lorsque ce dernier se trouve en position allongée. L'accoudoir 16 pourra être un accoudoir escamotable entre une position relevée permettant au passager de poser ses coudes lorsque le siège correspondant 13.1-13.4 est en position assise et une position abaissée dans laquelle l'accoudoir 16 se situe dans le prolongement du siège 13.1-13.4 en position allongée.

Chaque siège 13.1-13.4 est également associé à une coque 20, visible notamment en figure 1b, positionnée autour de son dossier afin d'isoler le siège 13.1-13.4 d'un arrangement 10 voisin. Les coques 20 des sièges 13.1 et 13.2 (respectivement 13.3 et 13.4) d'un même ensemble 11 (respectivement 12) pourront être réalisées d'un seul tenant.

Par ailleurs, l'arrangement 10 comporte une première console centrale 27.1 et une deuxième console centrale 27.2 positionnées entre le premier ensemble de sièges 11 et le deuxième ensemble de sièges 12. La console centrale 27.1 est disposée entre les sièges 13.1 et 13.3. La console centrale 27.2 est disposée entre les sièges 13.2 et 13.4. Les consoles centrales 27.1, 27.2 présentent chacune une face supérieure plane 28 sur laquelle le passager pourra notamment poser des objets.

La première console centrale 27.1 comporte une première zone de pieds 30.1 et une deuxième zone de pieds 30.2 ouvertes suivant deux directions opposées l'une par rapport à l'autre et associées respectivement au premier siège 13.1 du premier ensemble 11 et au premier siège 13.3 du deuxième ensemble 12. Ainsi, la zone de pieds 30.1 se situe dans le prolongement du premier siège 13.1 du premier ensemble 11 lorsque ce dernier se trouve en position allongée. La zone de pieds 30.2 opposée se situe dans le prolongement du premier siège 13.3 du deuxième ensemble 12 lorsque ce dernier se trouve en position allongée.

De façon analogue, la deuxième console centrale 27.2 comporte une première zone de pieds 30.3 et une deuxième zone de repose-pieds 30.4 ouvertes suivant deux directions opposées l'une par rapport à l'autre et associées respectivement au deuxième siège 13.2 du premier ensemble 11 et au deuxième siège 13.4 du deuxième ensemble 12. Ainsi, la zone de pieds 30.3 se situe dans le prolongement du deuxième siège 13.2 du premier ensemble 11 lorsque ce dernier se trouve en position allongée. La zone de pieds 30.4 opposée se situe dans le prolongement du deuxième siège 13.4 du deuxième ensemble 12 lorsque ce dernier se trouve en position allongée.

Dans chaque console centrale 27.1, 27.2, les zones de pieds 30.1 et 30.2 (respectivement 30.3 et 30.4) sont superposées au moins partiellement suivant l'axe longitudinal X2. Ainsi, il existe au moins une droite perpendiculaire à l'axe longitudinal X2 qui coupe les deux zones de pieds 30.1 et 30.2 (respectivement 30.3 et 30.4) d'une même console centrale 27.1 (respectivement 27.2). Plus précisément, les zones de pieds 30.1-30.4 sont constituées par des logements 31 ouverts en direction du siège 13.1-13.4 correspondant et un coussin 32 de repose-pieds sensiblement horizontal situé à l'intérieur du logement 31 et sur lequel le passager peut reposer ses pieds, tel que cela est montré sur la figure 1a.

Les logements 31 réalisés dans une console centrale 27.1, 27.2 sont délimités chacun par un fond 33, les fonds 33 des deux logements 31 ménagés dans une même consoles 27.1, 27.2 étant reliés entre eux par une paroi commune 34 inclinée par rapport à l'axe longitudinal X2.

Afin de présenter un caractère modulaire, les consoles centrales 27.1, 27.2 sont avantageusement indépendantes l'une de l'autre. En variante, les consoles 27.1, 27.2 pourront toutefois être réalisées de façon monobloc de manière à ne former qu'une seule pièce.

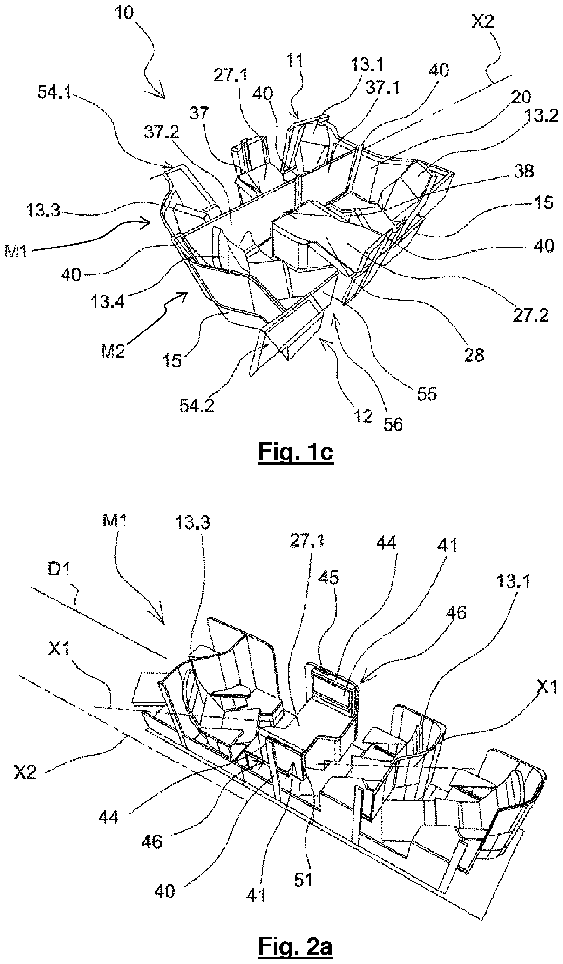

Comme cela est illustré par la figure 1c, on définit deux modules M1, M2 de sièges, à savoir un premier module formé par les sièges 13.1 et 13.3 en face l'un de l'autre, et un deuxième module formé par les sièges 13.2 et 13.4 en face l'un de l'autre. Ces modules M1, M2 sont séparés par une cloison centrale 37 s'étendant suivant l'axe longitudinal X2. Les axes X1 des sièges 13.1 et 13.3 (respectivement 13.2 et 13.4) sont sensiblement parallèles l'un par rapport à l'autre. Un des sièges 13.1 (ou 13.2) est tourné vers l'axe X2 tandis que l'autre siège 13.3 (ou 13.4) est tourné à l'opposé de l'axe X2. Ces modules M1 ou M2 de deux sièges face à face pourront être répétés dans les groupes latéraux de sièges dans la cabine d'avion. On définit une direction d'allongement longitudinale D1 d'un module M1, M2.

La cloison centrale 37 est avantageusement escamotable entre une position déployée et une position rangée. En position rangée, ladite cloison centrale 37 pourra être logée au moins partiellement dans un espace 38 entre les deux consoles centrales 27.1, 27.2. La cloison centrale 37 est réalisée en une seule ou en deux parties 37.1, 37.2 pour isoler indépendamment les sièges 13.1 et 13.2 (respectivement 13.3 et 13.4) côte à côte des deux ensembles de sièges 11, 12.

Dans un mode de réalisation particulier, la cloison centrale 37 est reliée mécaniquement à des mâts 40. En effet, l'arrangement 10 comportent des mâts 40 creux s'étendant verticalement pour autoriser le passage de faisceaux électriques acheminant notamment des signaux de puissance et de données pour des systèmes multimédia associés aux sièges 13.1-13.4. Il sera ainsi possible de tirer profit de la présence de ces mâts 40 pour les utiliser comme support de fixation de la cloison centrale 37 et des autres cloisons de l'arrangement 10. La présence de la cloison centrale 37 n'est toutefois pas obligatoire pour définir ces deux modules M1, M2.

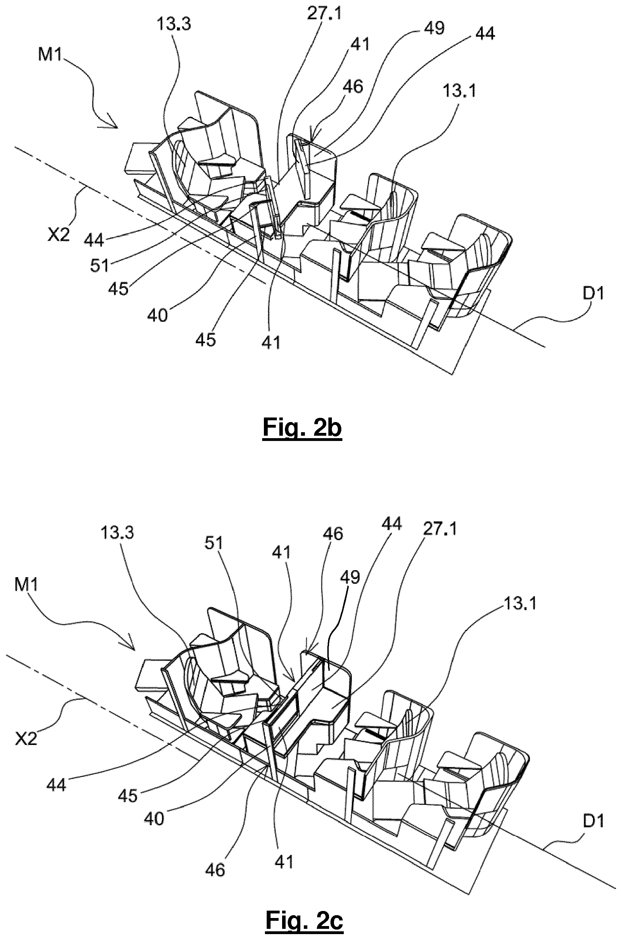

Par ailleurs, comme on peut le voir sur les figures 2a à 2c, des écrans 41 sont associés à chaque siège. Chaque écran 41 est monté sur un support 44. Des bras 45 assurent la liaison entre le support 44 et un élément structurel 46. Une extrémité des bras 45 est montée rotative par rapport au support 44 et l'autre extrémité des bras 45 est montée rotative par rapport à l'élément structurel 46.

Les supports d'écran 44 sont mobiles entre une position rangée dans laquelle les supports d'écran 44 s'étendent sensiblement parallèlement à la direction D1 et une position déployée d'utilisation dans laquelle les supports d'écran 44 s'étendent sensiblement perpendiculairement à la direction D1. La configuration est telle que lorsque les supports d'écran 44 sont dans une position déployée d'utilisation, les supports d'écran 44 sont positionnés sensiblement bord à bord et forment une paroi de séparation entre les deux sièges 13.1 et 13.3 situés en face l'un de l'autre. Cette paroi de séparation s'étend sensiblement perpendiculairement par rapport à la direction D1, c'est-à-dire qu'elle forme un angle de 90 degrés plus ou moins 10 degrés par rapport à D1. Par "sensiblement bord à bord", on entend le fait que les bords latéraux des deux supports d'écran 44 sont en contact l'un contre l'autre par un de leur bord ou à une faible distance l'un de l'autre. Cette distance est inférieure à 10 cm et de préférence inférieure à 5cm.

Par ailleurs, avantageusement, dans la position rangée, chaque support d'écran 44 s'étend suivant la largeur de la console 27.1 et ne dépasse pas de la console 27.1. Autrement dit, la longueur du support d'écran 44 est inférieure ou égale à la largueur de la console 27.1 mesurée dans la zone occupée par le support d'écran 44 lorsque ce dernier est en position rangée.

En l'occurrence, l'élément structurel 46 auquel le support d'écran 44 est relié par l'intermédiaire des bras 45 correspond à un mât 40 pour un des supports d'écran 44. L'élément structurel 46 correspond à une paroi latérale verticale 49 pour l'autre support d'écran 44.

Dans le mode de réalisation des figures 2a à 2c, les bras 45 sont reçus dans des gorges 51 ménagées respectivement dans une face supérieure et une face inférieure du support d'écran 44. Un rebord de la gorge 51 forme une butée d'arrêt du support d'écran 44 dans la position déployée d'utilisation.

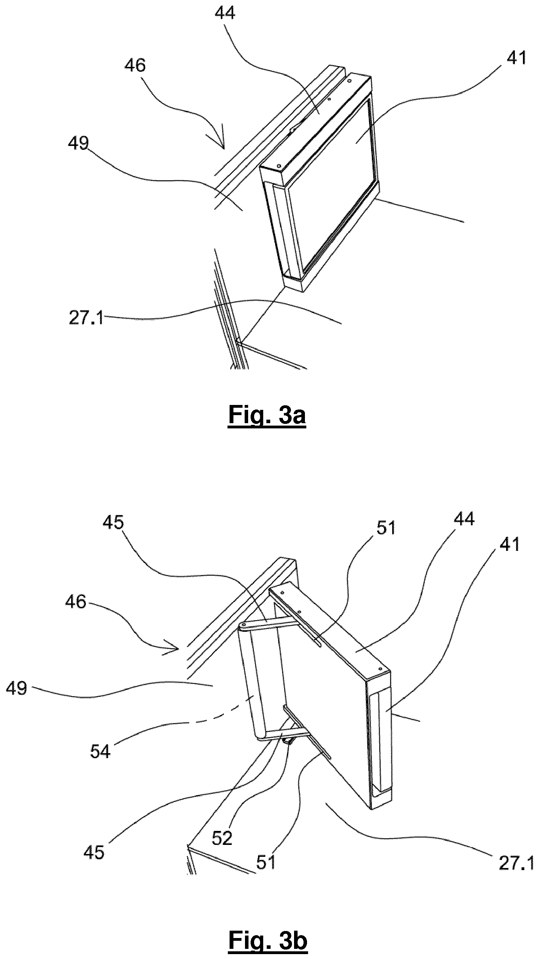

Dans le mode de réalisation des figures 3a à 3c, les bras 45 sont reçus dans des gorges 51 allongées réalisées dans la face arrière du support d'écran 44. Le fond de la gorge 51 forme une butée d'arrêt du support d'écran 44 dans la position déployée d'utilisation.

En outre, une glissière 52 pourra assurer une reprise des efforts appliqués sur les bras 45 du support d'écran 44. La glissière 52 permet d'accompagner le déplacement de l'extrémité du support 44 la plus proche de l'élément structurel 46 lorsque le support d'écran 44 passe d'une position à une autre. La glissière 52 est montée sur la face supérieure plane 28 de la console 27.1 et le support d'écran 44.

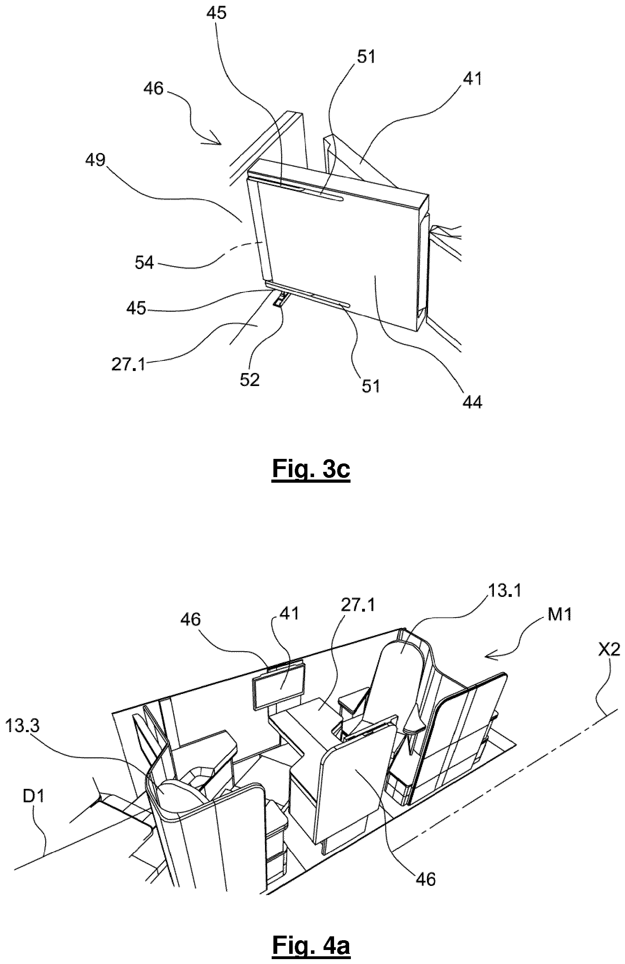

Par ailleurs, l'écran 41 pourra également être articulé par rapport au support 44 suivant un axe de rotation vertical, tel que cela est illustré par la figure 3c. Cela permet au passager d'orienter l'écran 41 dans la direction souhaitée. Cet axe de rotation est situé à proximité de l'extrémité du support 44 la plus éloignée de l'élément structurel 46 lorsque le support d'écran 44 est en position déployée d'utilisation.

On remarque également que l'axe de rotation du support d'écran 44 par rapport aux bras 45 est positionné à une distance d'une extrémité du support 44 correspondant à la longueur d'un bras 45. La distance est mesurée par rapport à l'extrémité la plus proche de l'élément structurel 46 lorsque le support d'écran 44 est en position déployée d'utilisation.

Les deux bras 45 sont reliés entre eux par une portion de liaison 54 sensiblement verticale formant l'axe de rotation du bras 45 par rapport à l'élément structurel 46. Les bras 45 et la portion de liaison 54 forment ainsi une pièce en forme de U positionnée à l'intérieur d'un guide fixé sur l'élément structurel 46.

En variante, il sera possible d'utiliser un seul bras 45 assurant la liaison mécanique entre le support d'écran 44 et l'élément structurel 46.

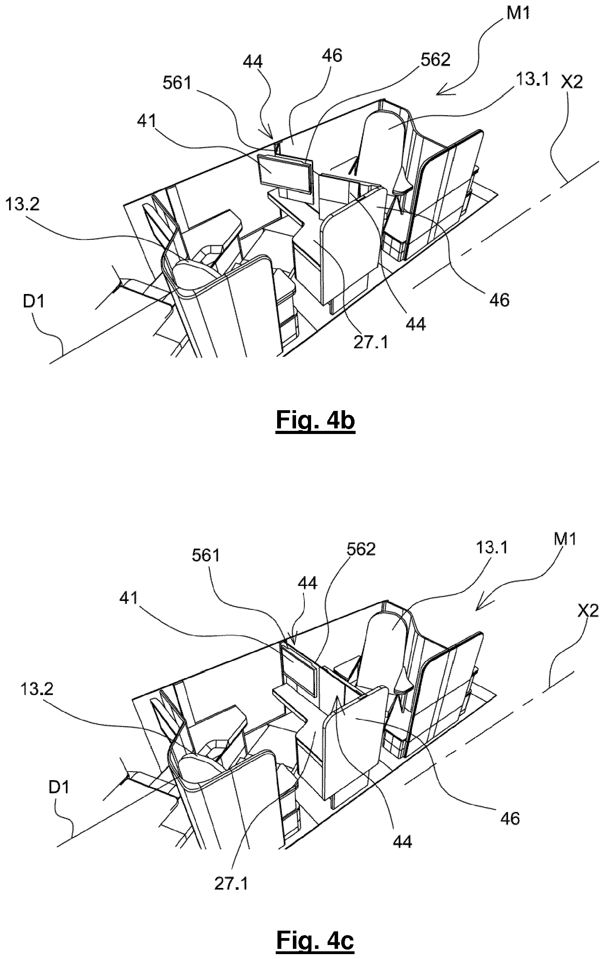

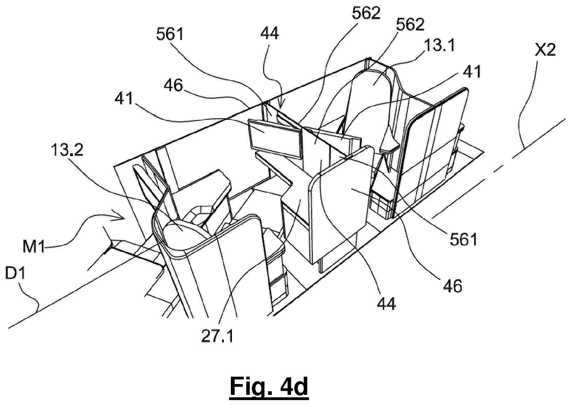

Dans le mode de réalisation des figures 4a à 4d, le support d'écran 44 comporte deux volets 561, 562 articulés entre eux suivant un axe de rotation vertical. On distingue un volet externe 561 qui est le plus proche de l'élément structurel 46 lorsque le support d'écran 44 est en position déployée et un volet interne 562 qui est le plus éloigné de l'élément structurel 46 lorsque le support d'écran 44 est en position déployée. Le volet externe 561 est monté rotatif autour d'un axe vertical par rapport à l'élément structurel 46 correspondant.

Afin de passer d'une position à l'autre, une extrémité de chaque volet interne 562 est apte à coulisser le long d'un rail transversal 58 qui est perpendiculaire à la direction D1, tout en pouvant tourner autour d'un axe vertical. Autrement dit, l'extrémité du volet interne 562 est montée mobile en rotation et en translation par rapport au rail 58 fixé sur la console 27.1.

Lorsque le support d'écran 44 est en position déployée d'utilisation, les volets interne 561 et externe 562 se situent sensiblement dans un même plan dans le prolongement l'un de l'autre.

En outre, lorsque les supports d'écran 44 sont en position d'utilisation déployée, les volets externes 562 des deux supports 44 adjacents se situent sensiblement bord à bord de manière à former une paroi de séparation entre les deux sièges 13.1 et 13.3 situés en face l'un de l'autre. Cette paroi de séparation s'étend sensiblement perpendiculairement par rapport à l'axe X2. Par "sensiblement bord à bord", on entend le fait que les volets externes 562 des deux supports d'écran 44 sont en contact l'un contre l'autre par un de leur bord ou à une faible distance l'un de l'autre. Cette distance est inférieure à 10 cm et de préférence inférieure à 5cm.

L'écran 41 pourra être monté mobile en rotation sur un des volets 561, 562 par rapport à un axe vertical. Cela permet au passager d'orienter l'écran 41 dans la direction souhaitée.

Lorsque le support d'écran 44 est dans une position rangée, les volets 561, 562 des supports d'écran 44 pourront être superposés au moins partiellement l'un sur l'autre.

Comme cela a été indiqué, les axes X1 des sièges 13.1 et 13.3 forment un angle par rapport à l'axe X2. En variante, les axes X1 des sièges 13.1, 13.3 pourront toutefois être parallèles par rapport à l'axe X2.

Suivant un mode de réalisation, les supports d'écran 44 pourront être formés par les boîtiers des écrans 41.

En variante, l'arrangement comporte, suivant une colonne, uniquement une succession de modules M1 ou M2 comme montré en figure 2a par exemple mais pas une succession de deux modules côte à côte. Autrement dit, il n'est pas indispensable que les deux modules M1 et M2 soient associés systématiquement l'un à l'autre. Ces modules M1, M2 peuvent être utilisés de façon indépendante dans l'aménagement de sièges de la cabine d'avion. L'invention pourra également être mise en œuvre avec des sièges installés dans d'autres moyens de transport, comme par exemple des sièges de bus, de trains, ou de bateaux.

## Revendications

1. Arrangement (10) de sièges individuels destiné à être installé dans une cabine d'avion (59) comportant au moins un module (M1) de deux sièges (13.1, 13.3) disposés en face l'un de l'autre, ledit module (M1) présentant une direction d'allongement longitudinale (D1), ledit arrangement comportant en outre:
- une console (27.1) disposée entre les deux sièges (13.1, 13.3) du module (M1),
- un écran (41) associé à chaque siège (13.1, 13.3), chaque écran (41) étant monté sur un support d'écran (44), **caractérisé en ce que**:
- les supports d'écran (44) sont mobiles entre une position rangée et une position déployée d'utilisation dans laquelle les supports d'écran (44) sont positionnés sensiblement bord à bord et forment une paroi de séparation entre les deux sièges (13.1, 13.3) situés en face l'un de l'autre.

2. Arrangement selon la revendication 1, **caractérisé en ce qu'**une longueur d'un support d'écran (44) est inférieure ou égale à une largueur de la console (27.1) lorsque ledit support d'écran (44) est en position rangée.

3. Arrangement selon la revendication 1, **caractérisé en ce qu'**au moins un bras (45) assure une liaison entre le support d'écran (44) et un élément structurel (46).

4. Arrangement selon la revendication 3, **caractérisé en ce qu'**une extrémité du bras (45) est montée rotative par rapport au support (44) et une autre extrémité des bras (45) est monté rotative par rapport à l'élément structurel (46).

5. Arrangement selon la revendication 3 ou 4, **caractérisé en ce que** l'élément structurel (46) est un mât (40) ou une paroi latérale verticale (49).

6. Arrangement selon l'une quelconque des revendications 3 à 5, **caractérisé en ce que** le bras (45) est apte à être reçu dans une gorge (51) ménagée dans une face du support d'écran (44).

7. Arrangement selon l'une quelconque des revendications 1 à 6, **caractérisé en ce qu'**une glissière (52) montée sur la console (27.1) est apte à assurer une reprise d'efforts appliqués sur le bras (45) du support d'écran (44).

8. Arrangement selon l'une quelconque des revendications 1 à 7, **caractérisé en ce qu'**un écran (41) est articulé par rapport au support d'écran (44) correspondant, notamment suivant un axe de rotation vertical.

9. Arrangement selon la revendication 1 ou 2, **caractérisé en ce qu'**un support d'écran (44) comporte un volet externe (561) et un volet interne (562) articulés entre eux suivant un axe de rotation vertical.

10. Arrangement selon la revendication 9, **caractérisé en ce que** le volet externe (561) est monté rotatif autour d'un axe vertical par rapport à un élément structurel (46) correspondant.

11. Arrangement selon la revendication 9 ou 10, **caractérisé en ce qu'**une extrémité du volet interne (562) est montée mobile en rotation et en translation par rapport à un rail (58) fixé sur la console (27.1).

12. Arrangement selon l'une quelconque des revendications 9 à 11, **caractérisé en ce que**, lorsqu'un support d'écran (44) est en position déployée d'utilisation, le volet externe (561) et le volet interne (562) se situent sensiblement dans un même plan dans le prolongement l'un de l'autre.

13. Arrangement selon l'une quelconque des revendications 9 à 12, **caractérisé en ce que** lorsque les supports d'écran (44) sont en position d'utilisation déployée, les volets externes (562) des deux supports d'écran (44) adjacents se situent sensiblement bord à bord de manière à former une paroi de séparation entre les deux sièges (13.1, 13.3).

14. Arrangement selon l'une quelconque des revendications 9 à 13, **caractérisé en ce qu'**un écran (41) est monté mobile en rotation sur un des volets (561, 562).

15. Arrangement selon l'une quelconque des revendications 9 à 14, **caractérisé en ce que** lorsqu'un support d'écran (44) est dans une position rangée, le volet externe (561) et le volet interne (562) sont superposés au moins partiellement l'un sur l'autre.

## Patentansprüche

1. Anordnung (10) einzelner Sitzen, die in einer Flugzeugkabine (59) installiert werden sollen, umfassend mindestens ein Modul (M1) von zwei einander gegenüberliegenden Sitzen (13.1, 13.3), wobei das Modul (M1) einen Längsextensionsrichtung (D1) aufweist, wobei die Anordnung ferner umfasst:
- eine Konsole (27.1), die zwischen den beiden Sitzen (13.1, 13.3) des Moduls (M1) angeordnet ist,
- einen Schild (41), der jedem Sitz (13.1, 13.3) zugeordnet ist, wobei jeder Schild (41) auf einer Schildhalterung (44) montiert ist, **gekennzeichnet durch**:
- die Schildhalterungen (44) zwischen einer verstauten Gebrauchsposition und einer ausgefahrenen Gebrauchsposition beweglich aufweist, in der die Schildhalterungen (44) im Wesentlichen stumpf positioniert sind und eine Trennwand zwischen den beiden einander gegenüberliegenden Sitzen (13.1, 13.3) bilden.

2. Anordnung nach Anspruch 1, **dadurch gekennzeichnet, dass** eine Länge einer Schildhalterung (44) kleiner als oder gleich einer Breite der Konsole (27.1) ist, wenn sich die Schildhalterung (44) in einer verstauten Position befindet.

3. Anordnung nach Anspruch 1, **dadurch gekennzeichnet, dass** mindestens ein Arm (45) eine Verbindung zwischen der Schildhalterung (44) und einem Strukturelement (46) herstellt.

4. Anordnung nach Anspruch 3, **dadurch gekennzeichnet, dass** ein Ende des Arms (45) drehbar relativ zur Halterung (44) und ein anderes Ende des Arms (45) drehbar relativ zum Strukturelement (46) montiert ist.

5. Anordnung nach Anspruch 3 oder 4, **dadurch gekennzeichnet, dass** das Strukturelement (46) ein Mast (40) oder eine vertikale Seitenwand (49) ist.

6. Anordnung nach einem der Ansprüche 3 bis 5, die **dadurch gekennzeichnet ist, dass** der Arm (45) für dessen Aufnahme in einer Nut (51) in einer Seite der Schildhalterung (44) geeignet ist.

7. Anordnung nach einem der Ansprüche 1 bis 6, **gekennzeichnet dadurch, dass** eine an der Konsole (27.1) montierter Gleitschiene (52) für eine Erholung von Spannungen auf den Arm (45) der Schildhalterung (44) geeignet ist.

8. Anordnung nach einem der Ansprüche 1 bis 7, **dadurch gekennzeichnet, dass** ein Schild (41) relativ zu dem entsprechenden Schildhalterung (44), insbesondere entlang einer vertikalen Drehachse, gelenkig ist.

9. Anordnung nach Anspruch 1 oder 2, **dadurch gekennzeichnet, dass** ein Schildhalterung (44) eine äußere Klappe (561) und eine innere Klappe (562) umfasst, die entlang einer vertikalen Drehachse miteinander verbunden sind.

10. Anordnung nach Anspruch 9, **dadurch gekennzeichnet, dass** die äußere Klappe (561) um eine vertikale Achse relativ zu einem entsprechenden Strukturelement (46) drehbar montiert ist.

11. Anordnung nach Anspruch 9 oder 10, **dadurch gekennzeichnet ist, dass** ein Ende der inneren Klappe (562) relativ zu einer an der Konsole (27.1) befestigten Schiene (58) drehbar und translatorisch montiert ist.

12. Anordnung nach einem der Ansprüche 9 bis 11, **gekennzeichnet dadurch, dass** bei einer ausgefahrenen Gebrauchsposition der Schildhalterung (44) die äußere Klappe (561) und die innere Klappe (562) im wesentlichen in der gleichen Ebene in der Verlängerung voneinander angeordnet sind.

13. Anordnung nach einem der Ansprüche 9 bis 12, **gekennzeichnet dadurch, dass** bei einer ausgefahrenen Gebrauchsposition der Schildhalterungen (44) die äußeren Klappen (562) der beiden benachbarten Schildhalterungen (44) im Wesentlichen stumpf angeordnet sind, um eine Trennwand zwischen den beiden Sitzen (13.1, 13.3) zu bilden.

14. Anordnung nach einem der Ansprüche 9 bis 13, **dadurch gekennzeichnet, dass** ein Schild (41) drehbar an einer der Klappen (561, 562) montiert ist.

15. Anordnung nach einem der Ansprüche 9 bis 14, **gekennzeichnet dadurch, dass** bei einer verstauten Position einer Schildhalterung die äußere Klappe (561) und die innere Klappe (562) zumindest teilweise übereinandergelegt sind.

## Claims

1. An arrangement (10) of individual seats to be installed in an aircraft cabin (59), comprising at least one module (M1) of two seats (13.1, 13.3) facing each other, said module (M1) having a longitudinal direction of extension (D1), said arrangement further comprising:
- a console (27.1) arranged between the two seats (13.1, 13.3) of the module (M1),
- a screen (41) associated with each seat (13.1, 13.3), each screen (41) being mounted on a screen support (44), **characterized in that**:
- the screen supports (44) are movable between a stowed position of use and a deployed position of use in which the screen supports (44) are positioned substantially edge to edge and form a partition wall between the two seats (13.1, 13.3) facing each other.

2. The arrangement according to claim 1, **characterized in that** a length of a screen support (44) is inferior or equal to a width of the console (27.1) when said screen support (44) is in stowed position.

3. The arrangement according to claim 1, **characterized in that** at least one arm (45) provides a connection between the screen support (44) and a structural element (46).

4. The arrangement according to claim 3, **characterized in that** one end of the arm (45) is rotatably mounted relative to the support (44) and another end of the arm (45) is rotatably mounted relative to the structural element (46).

5. The arrangement according to claim 3 or 4, **characterized in that** the structural element (46) is a mast (40) or a vertical side wall (49).

6. The arrangement according to any one of the claims 3 to 5, **characterized in that** the arm (45) is adapted to be received in a groove (51) in one face of the screen support (44) .

7. The arrangement according to any one of the claims 1 to 6, **characterized in that** a slide (52) mounted on the console (27.1) is adapted to ensure a taking up of stresses onto the arm (45) of the screen support (44).

8. The arrangement according to any one of the claims 1 to 7, **characterized in that** a screen (41) is articulated relative to the corresponding screen support (44), in particular along a vertical axis of rotation.

9. The arrangement according to claim 1 or 2, **characterized in that** a screen support (44) comprises an outer flap (561) and an inner flap (562) articulated to one another along a vertical axis of rotation.

10. The arrangement according to claim 9, **characterized in that** the outer flap (561) is rotatably mounted about a vertical axis relative to a corresponding structural element (46) .

11. The arrangement according to claim 9 or 10, **characterized in that** one end of the internal flap (562) is rotatingly and translatingly mounted relative to a rail (58) fixed to the console (27.1).

12. The arrangement according to any one of the claims 9 to 11, **characterized in that**, when a screen support (44) is in the deployed position of use, the outer flap (561) and the inner flap (562) are located substantially in the same plane in the extension of one another.

13. The arrangement according to any one of the claims 9 to 12, **characterized in that**, when the screen supports (44) are in the deployed position of use, the outer flaps (562) of the two adjacent screen supports (44) are located substantially edge to edge so as to form a partition wall between the two seats (13.1,13.3).

14. The arrangement according to any one of the claims 9 to 13, **characterized in that** a screen (41) is rotatably mounted on one of the flaps (561, 562).

15. The arrangement according to any one of the claims 9 to 14, **characterized in that**, when a screen support (44) is in a stowed position, the outer flap (561) and the inner flap (562) are at least partially superimposed on one another.
